# EUROPEAN PATENT SPECIFICATION

(11) **EP 0 508 540 B1**
(45) Date of publication and mention of the grant of the patent: **02.08.1995**
(21) Application number: 92200983.2
(22) Date of filing: 06.04.1992
(51) Int. Cl.: C01B 39/00, B01J 29/04

(54) **Process for preparing a crystalline zeolite**
Verfahren zur Herstellung eines kristallinen Zeolithen
Procédé de préparation d'une zéolite cristalline

(30) Priority: 08.04.1991 GB 9107311
(43) Date of publication of application: 14.10.1992
(73) Proprietor: SHELL INTERNATIONALE RESEARCH MAATSCHAPPIJ B.V., 2596 HR Den Haag (NL)
(72) Inventor: Keijsper, Johannes Jacobus, NL-1031 CM Amsterdam (NL); MacKay, Munro, NL-1031 CM Amsterdam (NL)

(56) References cited:
- EP-A- 0 195 646
- EP-A- 0 333 283
- NATURE vol. 329, no. 6142, 29 October 1987, LONDON GB pages 819 - 821 M. E. LEONOWICZ ET AL.

## Description

The present invention relates to a process for preparing a crystalline zeolite having in the as-synthesized form a molar composition expressed by the formula:

(0.9-1.1)M_{2/n}0.X₂O₃.(5-20)SiO₂.(0.7-0.02)R.(0-10)H₂O

wherein M is an alkali or alkali earth metal ion having a valency n, X is a trivalent metal and R is an organic template.

A related crystalline zeolite ECR-1 is described in USA patent specification No. 4,657,748. According to this document a tetraalkyl ammonium cation of the type (CH₃)₂R'₂N, wherein R' is ethyl, propyl, butyl, hydroxyethyl or hydroxypropyl, is used as the organic template in the preparation of ECR-1.

This preparation method has the following drawbacks:
1) The template is expensive and/or difficult to synthesize.
2) According to the working examples of US 4,657,748 the preparation has to continue for a relatively long time at a relatively high temperature.
3) According to the working examples of US 4,657,748 the product may easily contain non-porous analcite and has a SiO₂/Al₂O₃ ratio of only 6.5 which limits its stability.

Surprisingly it has now been found that these drawbacks can be avoided when easily accessible trioxane 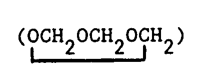
is used as a template in the preparation of ECR-1.

The present invention therefore relates to a process for preparing a crystalline zeolite having in the as-synthesized form a molar composition expressed by the formula:

(0.9-1.1)M_{2/n}0.X₂O₃.(5-20)SiO₂.(0.7-0.02)trioxane.(0-10)H₂O

wherein M is an alkali or alkaline earth metal ion having a valency n and X is at least one of Al, Fe or Ga, which process comprises maintaining an aqueous mixture comprising a source of silicon, a source of at least one of aluminium, iron or gallium, a source of alkali or alkaline earth metal M and trioxane at elevated temperature until the crystalline zeolite is formed which is subsequently separated from the mother liquor and dried, in which mixture the various components are initially present in the following molar ratios:
X₂O₃ : SiO₂ = 0.06-0.12
H₂O : SiO₂ = 5-30
OH⁻ : SiO₂ = 0.05-0.6
trioxane: SiO₂ = 0.1-2.0
M_{2/n}O : SiO₂ = 0.15-0.35
If a ratio X₂O₃:SiO₂ higher than 0.12 is applied in the reaction mixture zeolite omega is formed instead of the present zeolite. If on the other hand the ratio X₂O₃:SiO₂ in the reaction mixture is lower than 0.06 sodalite containing traces of mordenite are the result of the preparation. At a ratio M_{2/n}O:SiO₂>0.35 in the reaction mixture sodalite and a trace amount of zeolite omega is formed.

Reaction mixtures containing M_{2/n}O and SiO₂ in a ratio M_{2/n}O:SiO₂<0.15 give mordenite as a reaction product.

Preferably, the crystalline zeolites of an ECR-1 related type are prepared according to the present invention from aqueous mixtures in which the various components are initially present in the following molar ratios:
X₂O₃ : SiO₂ = 0.07-0.11
H₂O : SiO₂ = 10-25
OH⁻ : SiO₂ = 0.1-0.6
trioxane: SiO₂ = 0.2-1.5
M_{2/n}O : SiO₂ = 0.2-0.3
More preferably, the molar ratio X₂0₃:S:0₂ initially present in the aqueous mixture is chosen from 0.08 to 0.10 and the molar ratio OH⁻:Si0₂ initially present in the aqueous mixture is chosen from 0.15 to 0.5.

The preparation of the crystalline zeolites according to the present invention can suitably be carried out by maintaining the aqueous mixture at a temperature above 100 °C and in particular in the range of from 120 to 180 °C. Preferably, the aqueous mixture is maintained for at least 6 hours at such temperatures. The product obtained can typically be calcined at a temperature of 500-800 °C.

The preparation according to the present invention may be carried out at autogenous pressure or at a more elevated pressure.

Examples of suitable alkali or alkaline earth metal sources which may be used in the preparation of the crystalline zeolites according to the present invention are nitrates, carbonates, hydroxides and oxides. Preferably, a sodium compound, in particular sodium hydroxide is used as alkali metal source in the process according to the present invention. Examples of suitable silicon, aluminium, iron or gallium sources comprise, respectively, solid silicas, silica sols, silica gels and siliceous acid; aluminium hydroxide, aluminium sulphate, gamma-alumina and preferably sodium aluminate; iron nitrates; gallium nitrate or freshly prepared gallium hydroxide.

The synthesis of zeolites according to the present invention can be carried out in the absence of seed crystals, but preferably seed crystals are present, since better product quality will result. More preferably, seed crystals are present in an amount from 1 to 10 %wt calculated on SiO₂ in the synthesis mixture, that is in the aqueous synthesis mixture at the start of the synthesis.

The crystalline zeolites prepared according to the present invention can be used as absorbent and extractant means, and as catalyst or as catalyst carrier in the operation of various catalytic processes. They are particularly suitable as catalyst (carrier) and/or absorbent means in hydroisomerization processes in which normal or slightly branched paraffins are converted to iso-paraffins.

When the crystalline zeolites according to the present invention are used in catalytic processes they normally comprise one or more compounds having catalytic activity. Particular suitable compounds are one or more salts or oxides of metals chosen from Group III A, IV B, VIII or the Rare Eearth metals.

The cation(s) present in the as-synthesized form of the crystalline zeolites prepared according to the present invention can be (partly) replaced by ion exchange with other cations including other metal ions.

The invention will now be illustrated by the following Examples.

### Example 1

A crystalline zeolite of ECR-1 type was prepared by mixing an aqueous mixture of silica sol (40 %wt SiO₂), NaOH, NaAlO₂, trioxane and ECR-1 seeds (3 %wt calculated on SiO₂ in the mixture) in water till a homogeneous gel was obtained. The gel obtained was subsequently maintained at 150 °C for 30 hours in a stirred teflon-lined autoclave at autogenous pressure. The molar composition of the aqueous mixture was as follows:
40 SiO₂, 3.8 Al₂O₃, 10 Na₂O, 600 H₂O, 40 trioxane.

After synthesis the solids were separated from the unreacted components, water washed, and dried at 120 °C. The product of high crystallinity was analyzed by X-ray diffraction and elemental analyses and had the following properties:
a) an X-ray powder diffraction pattern of which the 15 strongest lines are shown hereinbelow (relative error is 3%).

**Table I**

| d(A) | Intensity |
|---|---|
| 9.0 | m (medium) |
| 7.8 | w (weak) |
| 6.7 | m |
| 6.3 | m |
| 5.9 | w |
| 4.5 | m |
| 4.20 | m |
| 3.71 | m |
| 3.65 | vs (very strong) |
| 3.56 | m |
| 3.48 | vs |
| 3.23 | m |
| 3.16 | s (strong) |
| 3.00 | w |
| 2.58 | m |

b) a molar composition expressed by the formula:

0.10Na₂O.0.10Al₂O₃.SiO₂.0.06trioxane.0.50H₂O

Subsequently the crystalline product obtained was calcined in air at 600 °C for 18 hours, analysed by X-ray diffraction and elemental analyses and had the following properties:
a) an X-ray powder diffraction pattern of the 16 strongest lines are shown hereinbelow. (Relative error is 3%).

**Table II**

| d(A) | Intensity |
|---|---|
| 10.5 | w |
| 9.0 | s |
| 7.8 | w |
| 6.7 | m |
| 6.3 | s |
| 5.9 | m |
| 4.44 | m |
| 4.21 | m |
| 3.78 | m |
| 3.63 | vs |
| 3.48 | s |
| 3.23 | m |
| 3.17 | s |
| 3.01 | m |
| 2.90 | m |
| 2.57 | m |

b) a molar composition expressed by the formula:

0.09Na₂O.0.09Al₂O₃.SiO₂

### Examples 2-9

The following examples 2-9 were carried out substantially analogous as described in Example 1 but with molar ratios of:

| Ex. | SiO₂ | Al₂O₃ | Na₂O | H₂O | trioxane | T °C | t hr | seed ECR-1 | product |
|---|---|---|---|---|---|---|---|---|---|
| 1 | 40 | 3.8 | 10 | 600 | 40 | 150 | 30 | 3 wt% | ECR-1 |
| 2 | 40 | 3.7 | 9.3 | 1000 | 30 | 150 | 24 | - | ECR-1 |
| 3 | 40 | 4.5 | 8.0 | 1000 | 30 | 150 | 24 | - | ECR-1 |
| 4 | 40 | 3.0 | 12.5 | 600 | 40 | 150 | 40 | 4 wt% | ECR-1 |
| 5 | 40 | 3.0 | 12.5 | 600 | 10 | 150 | 72 | 4 wt% | ECR-1 + tr. zeolite omega |
| 6a | 40 | 5.0 | 12.0 | 600 | 40 | 150 | 48 | 3 wt% | zeolite omega |
| 7* | 40 | 3.0 | 5.0 | 600 | 40 | 150 | 24 | 3 wt% | MORDENITE |
| 8** | 40 | 2.0 | 10 | 600 | 40 | 150 | 48 | 3 wt% | MORDENITE |
| 9*** | 40 | 1.5 | 2.5 | 800 | 40 | 150 | 48 | 3 wt% | SODALITE |

| | | | | | | | | | |
|---|---|---|---|---|---|---|---|---|---|
| * Comparison; Na₂O/SiO₂ = 0.13 too low | | | | | | | | | |
| a: Comparison; Al₂O₃/SiO₂ = 0.13 too high | | | | | | | | | |
| ** Comparison; Al₂O₃/SiO₂ = 0.05 too low | | | | | | | | | |
| *** Comparison; Al₂O₃/SiO₂ and Na₂O/SiO₂ too low | | | | | | | | | |

Products were identified by their XRD-patterns.

Products denoted "ECR-1" in the above table had substantially the same XRD-pattern as shown in Table I.

From Examples 2 and 3 it is clear that also in the absence of ECR-1 seeds, zeolite ECR-1 is formed when the starting synthesis mixture has a molar composition within the molar synthesis boundaries.

From Examples 6-9 it is clear that performing a synthesis, starting outside the synthesis boundaries, results in zeolitic products other than ECR-1.

## Claims

1. A process for preparing a crystalline zeolite having in the as-synthesized form a molar composition expressed by the formula:
(0.9-1.1)M_{2/n}0.X₂O₃.(5-20)SiO₂.(0.7-0.02)trioxane.(0-10)H₂O
wherein M is an alkali or alkaline earth metal ion having a valency n and X is at least one of Al, Fe or Ga, which process comprises maintaining an aqueous mixture comprising a source of silicon, a source of at least one of aluminium, iron or gallium, a source of alkali or alkaline earth metal M and trioxane at elevated temperature until the crystalline zeolite is formed which is subsequently separated from the mother liquor and dried, in which mixture the various components are initially present in the following molar ratios:
X₂O₃ : SiO₂ = 0.06-0.12
H₂O : SiO₂ = 5-30
OH⁻ : SiO₂ = 0.05-0.6
trioxane: SiO₂ = 0.1-2.0
M_{2/n}O : SiO₂ = 0.15-0.35

2. A process according to claim 1 in which the various components in the mixture are initially present in the following molar ratios:
X₂O₃ : SiO₂ = 0.07-0.11
H₂O : SiO₂ = 10-25
OH⁻ : SiO₂ = 0.1-0.6
trioxane: SiO₂ = 0.2-1.5
M_{2/n}O : SiO₂ = 0.2-0.3

3. A process according to claim 1 or 2, which comprises maintaining the mixture at a temperature above 100 °C.

4. A process according to claim 3, which comprises maintaining the mixture at a temperature of 120 to 180 °C for at least 6 hours.

5. A process according to any one of claims 1-4, in which a sodium compound, in particular sodium hydroxide is used as a source of alkali metal.

6. A process according to any one of claims 1-5, which comprises calcining the obtained product at a temperature of 500 to 800 °C.

7. A process according to any one of claims 1-6, in which seed crystals of the crystalline zeolite are present in the aqueous mixture.

8. A process according to claim 7, in which 1 to 10 %wt seed crystals are present in the aqueous mixture.

## Patentansprüche

1. Verfahren zur Herstellung eines kristallinen Zeoliths, der in der aus der Synthese stammenden Form eine molare Zusammensetzung entsprechend der Formel:
(0,9-1,1)M_{2/n}0.X₂O₃.(5-20)SiO₂.(0,7-0,02)Trioxan.(0-10)H₂O
besitzt, worin M ein Alkali- oder Erdalkaliion mit einer Wertigkeit n und X mindestens eines aus der Gruppe Al, Fe oder Ga bedeuten, wobei das Verfahren darin besteht, daß man eine wäßrige Mischung aus einem Silizium liefernden Ausgangsstoff, einem mindestens eines aus der Gruppe Aluminium, Eisen oder Gallium liefernden Ausgangsstoff, einem Alkali- oder Erdalkalimetall M liefernden Ausgangsstoff und Trioxan bis zur Bildung des kristallinen Zeoliths bei erhöhter Temperatur hält und den Zeolith anschließend aus der Mutterlauge abtrennt und trocknet, wobei die verschiedenen Komponenten in der Mischung zu Beginn in folgenden Molverhältnissen vorliegen:
X₂O₃ : SiO₂ = 0,06 - 0,12
H₂O : SiO₂ = 5 - 30
OH⁻ : SiO₂ = 0,05 - 0,6
Trioxan : SiO₂ = 0,1 - 2,0
M_{2/n}O : SiO₂ = 0,15 - 0,35

2. Verfahren nach Anspruch 1, worin die verschiedenen Komponenten in der Mischung zu Beginn in folgenden Molverhältnissen vorliegen:
X₂O₃ : SiO₂ = 0,07 - 0,11
H₂O : SiO₂ = 10 - 25
OH⁻ : SiO₂ = 0,1 - 0,6
Trioxan : SiO₂ = 0,2 - 1,5
M_{2/n}O : SiO₂ = 0,2 - 0,3

3. Verfahren nach Anspruch 1 oder 2, wobei man die Mischung bei einer Temperatur oberhalb 100°C hält.

4. Verfahren nach Anspruch 3, wobei man die Mischung mindestens 6 Stunden bei einer Temperatur von 120 bis 180°C hält.

5. Verfahren nach einem der Ansprüche 1-4, wobei als Alkalimetall liefernder Ausgangsstoff eine Natriumverbindung, insbesondere Natriumhydroxid verwendet wird.

6. Verfahren nach einem der Ansprüche 1-5, wobei man das erhaltene Produkt bei einer Temperatur von 500-800°C glüht.

7. Verfahren nach einem der Ansprüche 1-6, wobei in der wäßrigen Mischung Impfkristalle des kristallinen Zeoliths vorliegen.

8. Verfahren nach Anspruch 7, wobei in der wäßrigen Mischung 1 bis 10 Gew.-% Impfkristalle vorliegen.

## Revendications

1. Un procédé de préparation d'une zéolite cristalline ayant dans la forme brute de synthèse une composition molaire représentée par la formule :
(0,9-1,1)M_{2/n}O.X₂O₃.(5-20)SiO₂.(0,7-0,02)trioxanne.(0-10)H₂O
dans laquelle M est un ion de métal alcalin ou alcalinoterreux ayant une valence n et X est au moins un des métaux Al, Fe ou Ga, lequel procédé comprend le maintien d'un mélange aqueux comprenant une source de silicium, une source d'au moins un des métaux aluminium, fer ou gallium, une source de métal alcalin ou alcalino-terreux M et du trioxanne à température élevée jusqu'à ce que la zéolite cristalline soit formée pour être ensuite séparée de la liqueur-mère et séchée, les divers constituants étant initialement présents dans le mélange dans les rapports molaires suivants :
X₂O₃ : SiO₂ = 0,06-0,12
H₂O : SiO₂ = 5-30
OH⁻ : SiO₂ = 0,05-0,6
trioxanne : SiO₂ = 0,1-2,0
M_{2/n}O : SiO₂ = 0,15-0,35

2. Un procédé selon la revendication 1, dans lequel les divers constituants dans le mélange sont présents initialement dans les rapports molaires suivants :
X₂O₃ : SiO₂ = 0,07-0,11
H₂O : SiO₂ = 10-25
OH⁻ : SiO₂ = 0,1-0,6
trioxanne : SiO₂ = 0,2-1,5
M_{2/n}O : SiO₂ = 0,2-0,3

3. Un procédé selon la revendication 1 ou 2, qui comprend le maintien du mélange à une température audessus de 100°C.

4. Un procédé selon la revendication 3, qui comprend le maintien du mélange à une température de 120 à 180°C pendant au moins 6 heures.

5. Un procédé selon l'une quelconque des revendications 1-4, dans lequel un composé du sodium, en particulier l'hydroxyde de sodium, est utilisé comme source de métal alcalin.

6. Un procédé selon l'une quelconque des revendications 1-5, qui comprend la calcination du produit obtenu à une température de 500 à 800°C.

7. Un procédé selon l'une quelconque des revendications 1-6, dans lequel des germes cristallins de la zéolite cristalline sont présents dans le mélange aqueux.

8. Un procédé selon la revendication 7, dans lequel de 1 à 10 % en poids de germes cristallins sont présents dans le mélange aqueux.
